# EUROPEAN PATENT SPECIFICATION

(11) **EP 0 792 960 B1**
(45) Date of publication and mention of the grant of the patent: **23.05.2001**
(21) Application number: 97301263.6
(22) Date of filing: 26.02.1997
(51) Int. Cl.: D03D 47/20, B29C 45/14

(54) **Tape head for a gripper loom, and a method for its construction**
Greiferkopf für eine Greiferwebmaschine und Verfahren zu seiner Herstellung
Tête de ruban pour métier à tisser à griffes et procédé pour sa réalisation

(30) Priority: 27.02.1996 IT MI960364
(43) Date of publication of application: 03.09.1997
(73) Proprietor: Sulzer Tessile S.R.L., 36015 Schio (IT)
(72) Inventor: Bortoli, Giulio, 36015 Schio (IT); Corain, Luciano, 36100 Vicenza (IT)
(74) Representative: Sulzer Management AG

(56) References cited:
- FR-A- 2 457 917
- FR-A- 2 541 321
- FR-A- 2 642 093
- DATABASE WPI Week 7850 Derwent Publications Ltd., London, GB; AN 78-90607 XP002032708 & JP 53 128 676 A (DAIICHI KASEI) , 9 November 1978

## Description

This invention relates to a gripper loom tape head which, by comprising a crest formable from any type of appropriate material, including non-thermoplastic material, enables optimum wear characteristics to be achieved so as not to create roughness for the specific yarn types used.

The invention also relates to a simple and reliable injection-moulding method for easy and accurate construction of such a tape head, without any danger to its necessary planarity, even if expedients for this purpose are absent, its planarity remaining reliably unaltered with time.

In gripper looms, each gripper is moved with reciprocating motion into and out of the shed formed from the warp yarns, by means of a tape, generally of stratified plastic laminate, on the head of which the gripper is locked to a support crest which is itself fixed to said tape head.

Various methods for fixing said crest to said tape are already known in the state of the art.

Said known methods consist substantially of riveting or screwing the parts together, however such fixing has various drawbacks which besides prejudicing the required planarity of the tape head, do not ensure either stable and reliable fixing or Intimate contact between the head and crest, which can result in vibration detrimental to the proper operation of the gripper.

In order to obviate said drawbacks, it has been considered in the document FR-A-2 541 321 to effect the fixing by moulding the crest directly onto the tape head. In other words, a plurality of shaped through fixing holes are created in said tape head, onto these there being injected thermoplastic material in a crest-shaped mould. The crest obtained in this manner is in intimate contact with the tape head and is securely fixed thereto by the infiltration of said thermoplastic moulding material into said shaped through holes in the tape head.

However, this latter solution also has drawbacks, of which the main drawback is the impossibility of free choice of the crest material, as would be necessary to achieve optimum rubbing wear resistance of the crest so as not to create roughness against specific types of yarn used, given that the material has to be a thermoplastic material. In this respect, as is well known to the expert of the art, the crest is always subject to wear by rubbing against the warp yarns, which can create on the crest such roughness as to damage, if not break, the yarns themselves. It is not possible to use other than thermoplastic materials for the purpose of achieving greater rigidity.

Again, during moulding, account must always be taken of the shrinkage of the thermoplastic material during its solidification, this shrinkage in this specific case leading to deformation of the crest-tape assembly, which would alter the tape planarity. In this respect, to compensate such shrinkage, the said moulding arrangement uses a particular curvature of longitudinal development within the mould, which besides involving constructional complications to achieve the correct curvature for compensating the shrinkage, does not always ensure perfect tape planarity. In this respect, whereas said curvature is always the same, the extent of shrinkage can vary on the basis of a plurality of variables in play. The known moulding method therefore also offers unreliable repeatability.

The present invention seeks to obviate said drawbacks by providing a gripper loom tape head, the gripper support crest of which can be made of any desired material, which no longer has to be thermoplastic moulding material.

According to one aspect of the present invention, there is provided a gripper loom tape head, comprising a gripper support crest to said tape head which for this purpose comprises through fixing holes flared towards the base of the tape and arranged in two longitudinal rows on one and the other side of the longitudinal axis of the tape head, characterised in that said gripper support crest is prefabricated in any desired material, is provided with a series of through fixing holes in proximity to its lower end, is arranged along said longitudinal axis of the underlying tape head perpendicular to this latter, and is maintained in position for all or nearly all its length by a thermoplastic injection-moulding material which surrounds most of the prefabricated crest and becomes inserted into the fixing holes of this latter, and into the flared fixing holes of the tape head, and extends along the upper surface of the tape head with or without discontinuity.

The tape head may have two flared holes of greater diameter than the said fixing holes, on the longitudinal axis in proximity to the longitudinal ends of the crest and through which the thermoplastic injection moulded material passes. The crest may be spaced from the tape head or may be in contact therewith.

In this manner, by surrounding most of said prefabricated crest, by becoming inserted into the holes therein and into said gap (where provided) by becoming inserted into the holes therein and into said gap between the crest and head, by extending along the upper surface of the tape head and by becoming inserted into the flared holes, a thermoplastic material injected into the mould not only achieves a stable and reliable fixing and a compact structure of as high a rigidity as required, but also, because of the perfect symmetry of the structure and the fact that the thermoplastic moulding material is subtended between two rigid elements, namely the crest and the tape head, means that the shrinkage of the thermoplastic material during its solidification does rot result in deformation of the assembly, hence ensuring the planarity of the tape head, which remains reliably unaltered with tite.

Thus the thermoplastic moulding material is no longer used to create the gripper support crest but instead is used as an adhesive for fixing the preformed crest to the tape head.

In this manner, the gripper support crest can be of very simple form and be made either of stratified plastic laminate, as is the tape head, or of the actual thermoplastic moulding material, such as nylon filled with carbon fibres or any other desired material having the required characteristics. Such a construction also results in greater tape head rigidity, which as is well known to the expert of the art is a basic requirement under certain working conditions.

Finally, according to a second aspect of the present invention, the method for constructing a tape head as described above comprises creating in the tape head, on one and the other side of its longitudinal axis, a double longitudinal series of fixing holes flared towards the tape base, and placing said tape head into a seat provided in the lower part or lower half-mould of an injection mould, characterised by also comprising the following steps: fabricating said gripper support crest of the desired material and forming a series of through fixing holes in its lower end; fixing said prefabricated crest into the appropriate seat provided along the longitudinal axis of the underlying tape head in the upper part or upper half-mould of said injection mould, in which there is provided a cavity corresponding to the impression of the thermoplastic material to be injected, closing the mould and injecting thereinto, through the relative injection channel, thermoplastic material, for example nylon reinforced with carbon fibres, until the mould voids, ie said cavity, all said holes and said gap, have been filed: awaiting solidification of the injected material, releasing.the crest from the upper half-mould, and opening the mould.

The invention will now be described in greater detail, by way of example, with reference to the drawings in which:
Figure 1 is a partial perspective view of a tape head formed in accordance with the invention;
Figure 2 is a section on the line A-A of Figure 1; and
Figures 3 and 4 illustrate schematically the method for constructing the tape head according to the invention.

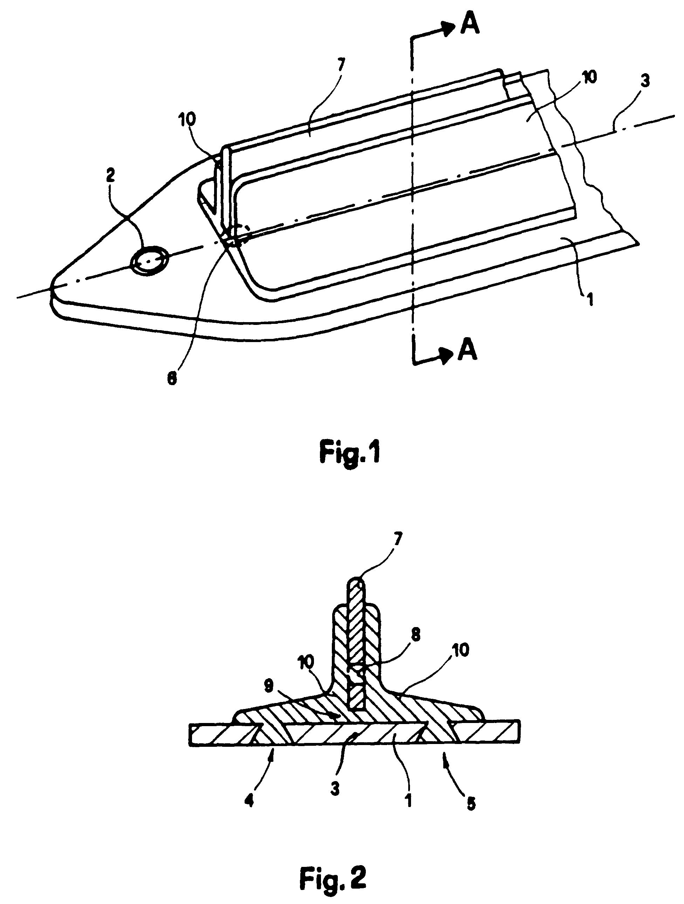

In the figures, the reference numeral 1 indicates the tape head, generally of stratified plastic laminate, which is provided at its front end with a bush 2 for the fixing of the gripper, and comprises on one and the other side of its longitudinal axis 3 two longitudinal rows of fixing holes 4 and 5 flared towards the base of the head, as is clearly visible in the figures. The tape head 1 is also provided with two holes, of greater diameter than the holes 4 and 5 (in Figure 1 the hole 6 is shown dashed, the other being out of the figure) on said longitudinal axis 3 in proximity to the ends of the gripper support crest 7. Said crest 7, which also acts as a stiffener for the tape head 1, is made of any desired material and preferably of stratified plastic laminate or thermoplastic material, and is provided with a longitudinal series of through fixing holes 8 in proximity to its lower end. The gripper support and head stiffening crest 7 is positioned along said longitudinal axis, perpendicular to the underlying tape head 1 with which it forms a gap 9, and is fixed to said head by the thermoplastic moulding material 10, for example nylon reinforced with carbon fibres, which surrounds the entire or nearly the entire length of the crest 7 and most of its height, so filling fixing holes 8, said gap 9 and the tape head fixing holes 4, 5 and 6 and extending along the upper surface of the tape head with or without discontinuity (the figures show only the arrangement without discontinuity).

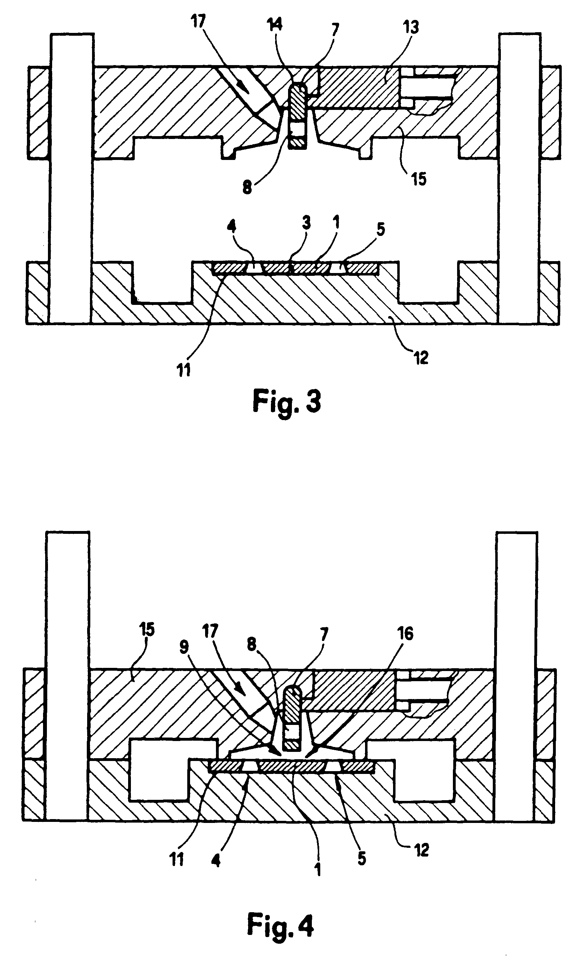

The construction of such a tape head is extremely simple and is shown in Figures 3 and 4.

The tape head 1 with the holes 4, 5 and 6 is placed in the seat 11 provided in the lower half-mould 12, and the prefabricated crest 7 having the holes 8 is fixed by the fixing system 13 into the respective seat 14 provided along said longitudinal axis 3 in the upper half-mould 15, in which there is also provided the cavity 16 corresponding to the impression of the thermoplastic material 10 to be injected, and the two half-moulds 12 and 15 are closed (see Figure 4). At this point the thermoplastic material is injected through the injection channel 17 to fill the cavity 16, including the gap 9 and all the holes. Solidification of the injected material is awaited, after which the fixing system 13 is disengaged, the mould is opened and a tape head is obtained in accordance with the invention.

It is to be noted that while, in the embodiment described there is a gap 9 between the head stiffening crest 7 and the underlying tape head 1, this gap may be omitted and the stiffening crest 7 may be in contact with the tape head 1.

## Claims

1. A gripper loom tape head (1), comprising a gripper support crest (7) connected to said tape head (1) which tape for this purpose comprises through fixing holes (4, 5) flared towards the base of the tape and arranged in two longitudinal rows on one and the other side of the longitudinal axis (3) of the tape head (1), characterised in that said gripper support crest (7) is prefabricated in any desired material, is provided with a series of through fixing holes (8) in proximity to its lower end, is arranged along said longitudinal axis (3) of the underlying tape head (1) perpendicular to this latter, and is maintained in position for all or nearly all its length by a thermoplastic injection-moulding matrial (10) which surrounds most of the prefabricated crest (7) and becomes inserted into the fixing holes (8) of this latter, and into the flared fixing holes (4, 5) of the tape head (1), and extends along the upper surface of the tape head (1) with or without discontinuity.

2. A tape head (1) as claimed in claim 1, characterised in that the tape head (1) also has two flared holes (6) of greater diameter than the said fixing holes (4, 5), on the longitudinal axis (3) in proximity to the longitudinal ends of the crest (7) and through which the thermoplastic injection moulded material (10) passes.

3. A tape head (1) as claimed in claim 1 or 2 characterised in that crest (7) is spaced from the tape head (1) by a gap (9) into which the thermoplastic injection moulding material (10) passes.

4. A tape head (1) as claimed in claim 1 or 2, characterised in that the crest (7) is in contact with the tape head (1).

5. A tape head (1) as claimed in any one of claims 1 to 4, characterised in that said prefabricated gripper support crest (7) is of stratified plastic laminate.

6. A tape head (1) as claimed in any one of claims 1 to 4, characterised in that said prefabricated gripper support crest (7) is of thermoplastic material.

7. A tape head (1) as claimed in claim 6, characterised in that said prefabricated gripper support crest (7) is of nylon filled with carbon fibres.

8. A method for constructing a tape head (1) in accordance with one of the preceding claims, comprising creating in the tape head (1), on one and the other side of its longitudinal axis (3), a double longitudinal series of fixing holes (4, 5) flared towards the tape base, and placing said tape head (1) into a seat (11) provided in the lower part of lower half-mould (12) of an injection mould, characterised by also comprising the following steps:
- fabricating said gripper support crest (7) of the desired material and forming a series of through fixing holes (8) in its lower end;
- fixing said prefabricated crest (7) into the appropriate seat (11) provided along the longitudinal axis (3) of the underlying tape head (1) in the upper part of upper half-mould (15) of said injection mould, in which there is provided a cavity corresponding to the impression of the thermoplastic material to be injected,
- closing the mould and injecting thereinto, through the relative injection channel (17), thermoplastic material, for example nylon reinforced with carbon fibres, until the mould voids, ie said cavity and all said holes (4, 5, 8) have been filed:
- awaiting solidification of the injected material, releasing the crest (7) from the upper half-mould (15), and opening the mould.

9. A method as claimed in claim 8, characterised in that the tape head (1) is created with two further holes (6), of greater diameter than the fixing holes (4, 5) on the tape head (1), on said longitudinal axis (3) in proximity to the ends of the gripper support crest (7).

10. A method as claimed in claim 8 or 9 characterised in that said crest (7) is fixed in such a manner that when the mould is closed, its lower edge remains spaced by a certain gap (9) from the underlying tape head (1).

## Patentansprüche

1. Greiferbandkopf (1) für eine Bandgreifer-Webmaschine mit einem Stützkamm (7), der am Greiferbandkopf (1) befestigt ist, wobei das Band zu diesem Zweck durchgehende Befestigungslöcher (4, 5) aufweist, die gegen die Basis des Bandes konisch sind und in zwei Längsreihen, auf beiden Seiten der Längsachse (3) des Greiferbandkopfs (1) verlaufen, dadurch gekennzeichnet, dass der Stützkamm (7) aus irgend einem Material vorgefertigt ist und in seinem unteren Ende mehrere durchgehende Löcher (8) zum Befestigen aufweist, dass der Stützkamm entlang der Längsachse (3) des darunter liegenden Greiferbandkopfs (1) und senkrecht zu dieser angeordnet ist, und mit einem thermoplastischen, gespritzten Material (10), welches den grössten Teil des vorgefertigten Stützkamms (7) umgibt und diesen über seine ganze oder fast über seine ganze Länge in dieser Lage, hält, und in die Befestigungslöcher (8) und in die konischen Befestigungslöcher (4, 5) des Greiferbandkopfs (1) eingeführt wird, und sich zusammenhängend oder mit Unterbrüchen entlang der oberen Oberfläche des Greiferbandkopfs (1) erstreckt.

2. Greiferbandkopf (1) nach Anspruch 1, dadurch gekennzeichnet, dass der Greiferbandkopf (1) auf der Längsachse (3) in der Nähe der longitudinalen Ende des Stützkamms ebenfalls zwei konische Löcher (6) aufweist, die einen grösseren Durchmesser als die konischen Löcher (4, 5) aufweisen, und durch welche das thermoplastische, spritzgegossene Material (10) verläuft.

3. Greiferbandkopf (1) nach Anspruch 1 oder 2, dadurch gekennzeichnet, dass zwischen Stützkamm (7) und Greiferbandkopf (1) ein Spalt (9)besteht, durch welchen das spritzgegossene Material (10) verläuft.

4. Greiferbandkopf nach Anspruch 1 oder 2, dadurch gekennzeichnet, dass der Stützkamm (7) den Greiferbandkopf (1) berührt.

5. Greiferbandkopf (1) nach irgend einem der Ansprüche 1 bis 4, dadurch gekennzeichnet, dass der vorfabrizierte Stützkamm (7) für den Greifer aus einem verstärkten Plastiklaminat besteht.

6. Greiferbandkopf (1) nach einem der Ansprüche 1 bis 4, dadurch gekennzeichnet, dass der vorfabrizierte Stützkamm (7) aus thermoplastischen Material besteht.

7. Greiferbandkopf (1) nach Anspruch 6, dadurch gekennzeichnet, dass der vorfabrizierte Stützkamm (7) aus mit Karbonfasern gefülltem Nylon besteht.

8. Verfahren zum Herstellen eines Greiferbandkopfs (1) nach einem der vorhergehenden Ansprüche, bei welchem im Greiferbandkopf (1) auf beiden Seiten der Längsachse (3) zwei Reihen von Befestigungslöchern (4, 5) angeordnet sind, und die gegen die Basis konisch sind, und dass der Greiferbandkopf (1) im Sitz (11) der unteren der Hälfte (12) des Werkzeugs eines Spritzwerkzeugs angeordnet wird, dadurch gekennzeichnet, dass das Verfahren die folgenden weiteren Schritte umfasst:
- herstellen des Stützkamms (7) aus dem gewünschten Material und machen einer Reihe von durchgehenden Löchern (8) in seinem unteren Ende;
- befestigen des vorfabrizierten Stützkamms (7) in einem passenden Sitz (11), der sich entlang der Längsachse (3) des darunter liegenden Greiferbandkopfs (1) in der oberen Hälfte der oberen Werkzeughälfte (15) des Spritzgusswerkzeugs befindet, in welcher ein Hohlraum für die Aufnahme des thermoplastischen Materials befindet, das eingespritzt wird,
- schliessen des Spritzwerkzeugs und einspritzen des thermoplastischen Materials, z.B. mit Karbonfasern verstärktes Nylon durch die Einsritzkanäle, bis die Hohlräume, z.B. der genannte Hohlraum und alle Löcher 4, 5, 8) gefüllt sind;
- warten bis das eingespritzte Material sich verfestigt hat, freigeben des Stützkamms (7) aus der oberen Werkzeughälfte (15) und öffnen des Werkzeugs.

9. Verfahren nach Anspruch 8, dadurch gekennzeichnet, dass der Greiferbandkopf (1) zwei weitere Löcher (6) aufweist deren Durchmesser grösser ist als jener der Löcher (4, 5) zum Befestigen im Band, entlang der Längsachse (3) in der Nähe der Ende des Stützkamms (7) des Greiferbandes.

10. Verfahren nach Anspruch 8 oder 9, dadurch gekennzeichnet, dass der Stützkamm (7) derart befestigt ist, dass wenn das Spritzwerkzeug geschlossen ist, zwischen der unteren Kante des Stützkamms und dem darunter liegenden Greiferbandkopf (1) ein gewisser Abstand (9) besteht.

## Revendications

1. Tête de ruban (1) pour métier à tisser à griffes, comprenant une crête de support de griffe (7) reliée à ladite tête de ruban (1), ce ruban, à cette fin, comprenant des trous de fixation traversants (4, 5) évasés vers la base du ruban et agencés selon deux rangées longitudinales sur un côté et l'autre de l'axe longitudinal (3) de la tête de ruban (1), caractérisée en ce que ladite crête de support de griffe (7) est préfabriquée à partir de n'importe quel matériau souhaité, présente une série de trous de fixation traversants (8) à proximité de son extrémité inférieure, est agencée le long dudit axe longitudinal (3) de la tête de ruban (1) située en dessous perpendiculairement à cette dernière, et est maintenue en position sur toute ou presque toute sa longueur par un matériau thermoplastique (10) moulé par injection qui entoure la plus grande partie de la crête préfabriquée (7) et s'insère dans les trous de fixation (8) de cette dernière, et dans les trous de fixation évasés (4, 5) de la tête de ruban (1), et s'étend le long de la surface supérieure- de la tête de ruban (1) avec ou sans discontinuité.

2. Tête de ruban (1) selon la revendication 1, caractérisée en ce que la tête de ruban (1) comporte également deux trous évasés (6) d'un plus grand diamètre que lesdits trous de fixation (4, 5), sur l'axe longitudinal (3) à proximité des extrémités longitudinales de la crête (7) et à travers lesquels passe le matériau thermoplastique moulée par injection (10).

3. Tête de ruban (1) selon la revendication 1 ou 2, caractérisée en ce que la crête (7) est espacée de la tête de ruban (1) par une fente (9) dans laquelle passe le matériau thermoplastique moulé par injection (10).

4. Tête de ruban (1) selon la revendication 1 ou 2, caractérisée en ce que la crête (7) est en contact avec la tête de ruban (1).

5. Tête de ruban (1) selon l'une des revendications 1 à 4, caractérisée en ce que ladite crête de support de griffe préfabriqué (7) est réalisée en un laminé plastique stratifié.

6. Tête de ruban (1) selon l'une des revendications 1 à 4, caractérisée en ce que ladite crête de support de griffe préfabriquée (7) est en matériau thermoplastique.

7. Tête de ruban (1) selon la revendication 6, caractérisée en ce que ladite crête de support de griffe préfabriquée (7) est en nylon rempli de fibres de carbone.

8. Procédé de fabrication d'une tête de ruban (1) en accord avec l'une des revendications précédentes, comprenant la création dans -la tête de ruban (1), sur un côté et l'autre de son axe longitudinal (3), d'une série longitudinale double de trous de fixation (4, 5) évasés vers la base du ruban, et placer ladite tête de ruban (1) dans un siège (11) réalisé dans la partie inférieure du demi-moule inférieur (12) d'un moule d'injection, caractérisé en ce qu'il comprend également les étapes suivantes:
- fabriquer ladite crête de support de griffe (7) à partir d'un matériau souhaité et former une série de trous de fixation traversants (8) dans son extrémité inférieure;
- fixer ladite crête préfabriquée (7) dans le siège approprié (11) prévu le long de l'axe longitudinal (3) de la tête de ruban (1) située en dessous dans la partie supérieure du demi-moule supérieur (15) dudit moule d'injection, dans laquelle est réalisée une cavité correspondant à l'impression du matériau thermoplastique à injecter,
- fermer le moule et injecter dans celui-ci, à travers le canal d'injection respectif (17), du matériau thermoplastique, par exemple du nylon renforcé par des fibres de carbone, jusqu'à ce que les vides du moule, c'est-à-dire ladite cavité et tous les trous précités (4, 5, 8) aient été remplis;
- attendre la solidification du matériau injecté, libérer la crête (7) du demi-moule supérieur (15) et ouvrir le moule.

9. Procédé selon la revendication 8, caractérisé en ce que la tête de ruban (1) est créée avec deux trous supplémentaires (6), d'un plus grand diamètre que les trous de fixation (4, 5) sur la tête de ruban (1), sur ledit axe longitudinal (3) à proximité des extrémités de la crête de support de griffe (7).

10. Procédé selon la revendication 8 ou 9, caractérisé en ce que ladite crête (7) est fixée de telle manière que lorsque le moule est fermé, son bord inférieur reste espacé selon une certaine fente (9) de la tête de ruban (1) située en dessous.
